# EUROPEAN PATENT SPECIFICATION

(11) **EP 1 945 538 B1**
(45) Date of publication and mention of the grant of the patent: **01.07.2015**
(21) Application number: 06790300.5
(22) Date of filing: 29.09.2006
(51) Int. Cl.: B65D 88/74, A01M 13/00, A23L 3/3409, B65D 88/12

(54) **A SHIPPING CONTAINER**
VERSANDBEHÄLTER
CONTENEUR DE TRANSPORT

(30) Priority: 29.09.2005 AU 2005905380
(43) Date of publication of application: 23.07.2008
(73) Proprietor: Asiaworld Shipping Services Pty Ltd, Artarmon, New South Wales 2064 (AU)
(72) Inventor: FITZPATRICK, Kenneth, Michael, New South Wales 2064 (AU); IVANINE, Serguei, Anatoly, New South Wales 2064 (AU)
(74) Representative: Manitz, Finsterwald & Partner GbR
(86) International application number: PCT/AU2006/001429
(87) International publication number: WO 2007/036000

(56) References cited:
- EP-B1- 0 149 411
- EP-B1- 0 149 411
- WO-A1-00/62607
- WO-A1-00/62607
- WO-A1-02/03797
- WO-A1-02/03797
- DE-U1-202004 005 754
- GB-A- 2 262 513
- US-A- 5 960 708
- US-B1- 6 457 402
- PATENT ABSTRACTS OF JAPAN & JP 09 249 288 A (ISHIKAWAJIMA HARIMA HEAVY IND CO LTD) 22 September 1997
- PATENT ABSTRACTS OF JAPAN & JP 02 303 442 A (HITACHI PLANT ENG & CONSTR CO LTD) 17 December 1990

## Description

### Field of the Invention

The present invention relates generally to a modified type of shipping container. The invention can be used in conjunction with a fumigation system for the fumigation of any type of bulk material, timber dunnage and cargo packing materials, manufactured goods and organic produce which may contain pests, insects or other vermin and which therefore requires fumigation.

### Background to the Invention

Large quantities of manufactured goods, bulky goods and agricultural produce are carried all over the world in ISO shipping containers. Often the manufactured goods are packed into position in the container using timber or other packing materials. Bulky goods (such as grains or rice) and agricultural produce (such as fruit and vegetables), as well as some manufactured goods and their associated packaging can be infested by pests, parasites, insects or other vermin from another country, or another part of the same country. These pests and parasites can include, for example, borers, lice, ticks, fleas or termites. It is best that the contaminated produce, manufactured goods and timber dunnage and packaging not leave the vicinity of the airport, dock or wharf facility since this would pose an environmental exposure risk.

It is common practice to fumigate such goods prior to shipment so that multiple handling in a further treatment process is not required, and before the goods leave their geographic region of origin to prevent the spread of

insects and vermin. However, many imported goods have not been fumigated at the point of despatch, so quarantine practices often require a fumigation treatment to be conducted upon arrival.

Fumigation processes for bulky materials and manufactured goods, as well as for shipping containers themselves (which can contain timber floors etc) are known in the art. These processes involve placement of a heavy, impervious blanket or other covering article over the materials to be fumigated followed by subsequent addiction of toxic gas flow under the blanket to fumigate the covered goods. Current methods of fumigation under blankets are crude, ineffective at fully eliminating insect infestation since little mixing of gases with the goods to be treated can occur, and highly dangerous from an occupational health standpoint since the gases used for effective fumigation are extremely toxic. Subsequent atmospheric discharges of fumigant gases, for example methyl bromide, are highly undesirable also because this gas is an ozone depleting substance. Sometimes the fumigant gas can be trapped in pockets and interstices between the goods being fumigated, and present a danger during later occupational contact with these goods.

EP 0 149 411 discloses a shipping container with two gas portals couplable to an external fumigation/extraction system which comprises an opening placing an interior and exterior of the container in fluid communication.

### Summary of the invention

It is the object of the invention to provide an improved shipping container, an improved fumigation assembly and an improved method for retrofitting a pre-existing shipping container.

This object is achieved with a shipping container having the features of claim 1, a fumigation assembly having the features of claim 10 and a method of retrofitting a pre-existing shipping container having the features of claim 14. Subclaims are directed to preferable embodiments.

In a first aspect the present invention provides an ISO shipping container which incorporates at least one gas portal, the portal adapted for being operatively coupled to a fumigation system external to the container for fumigating the container, where the fumigation system comprises a fumigant introduction means to allow a flow of a fumigant into the shipping container and a fumigant extraction means arranged to remove fumigant from the shipping container,
the portal incorporating:
- an opening which places an interior and an exterior of the container in fluid communication; and
- a sealing arrangement positioned at the opening to enable an in use coupling of the fumigation system at the portal and closure of the opening when the fumigation system is not coupled to the portal;
wherein the portal protrudes out of the container only to the extent that it does not interfere with placement of the container in a stack or other close-facing relationship with an adjacent container.

When the term "ISO shipping container" is used throughout this specification, it includes various standard sizes of shipping containers approved by the International Standards Organisation for road, rail and shipping movement of goods. The term is to be construed to include all types of general purpose, 'reefer' (refrigerated) and 'bulker' (grain-carrying) types of container, as well as airtainers used on commercial aircraft for transportation of goods.

When the term "protrudes out of the container" is used throughout this specification, it is to be construed to mean that the portal does not protrude significantly beyond the maximum external dimensions of the container, which are normally defined by the walls, doors, roof or floor of the container itself, or by.the dimensions of any external attachments thereat, such as locking rods or cam devices that are normally arranged to secure the end doors of an ISO container (and which can have a latch and pin fastening arrangement), or protruding corner reinforcement stiffeners or basal side edge beams etc. All of these items can extend some distance beyond the external dimensions of the container box itself. It is these external attachments that normally limit the proximity of placement of adjacent containers when stacked on top of one another, or when placed end to end, or alongside, an adjacent container.

By having a portal which is limited in size so that it does not protrude to any significant extent beyond these maximum external dimensions, the containers can be handled and positioned no differently to conventionally known ISO containers. This means that no additional space is taken up, and no new handling considerations are required, either when the container is being moved on of off a ship, truck or aircraft, or when stored at dock, port or airport facilities, or when actually on board a ship, truck or aircraft during transportation.

In one embodiment, the shipping container can have a single portal for operative coupling to one of the fumigant inlet means or fumigant extraction means, in use so that fumigant can flow between an interior and an exterior of the container. In this configuration, the fumigant inlet means and fumigant extraction means are coupled to the same portal but necessarily at different times. For example, in one possible circumstance, the fumigant inlet means can first be connected to the portal and fumigant introduced into the container, whereupon the fumigant inlet means can be disconnected and the fumigant extraction means subsequently connected to the same portal, for extraction removal of the fumigant and perhaps after some time interval has elapsed. For example, the container could have had some fumigation carried out in it and then the fumigant left for a period of time. In another arrangement, the container can be fumigated and the fumigant evacuated, but some residual gases or trapped gases could remain between the goods that were fumigated. A subsequent gas extraction removal step could assist in the removal of such gases.

In an alternative embodiment, the shipping container can have two portals for operative coupling to one each of the fumigant inlet means and the fumigant extraction means, in use so that fumigant can flow from an exterior of the container to an interior thereof via one portal, and from the interior to the exterior of the container via the other of the portals. In this configuration, the fumigant inlet means and fumigant extraction means can both be coupled to the shipping container at the same time, each being coupled to different portals. In this arrangement fumigant can be simultaneously introduced into the container and extracted from the container, allowing for a 'continuous flow' fumigation operation.

In one embodiment, the portal can have a sealing arrangement which includes a valve capable of being opened and closed. Whether there are one or two (or more) portals present, in each case the valve(s) are located in at least one of a wall, roof, floor or door of the shipping container. Closure arrangements are possible other than a valve, for example a simple removable closure such as a stopper, cap or plug, or other types of seal such as a flap, a zip, a screw-on cover plate, a slidable cover, and so on. The selected closure arrangement is normally securable to prevent the passage of fumigant to a significant or complete extent. This means that the toxic gases normally used in fumigation applications will not pose any occupational health risk to operators of the fumigation apparatus during processing, within the designated exposure limits in the particular workplace.

In one form, the valves are of a type that is adapted for detachable engagement with a conduit located at an exterior of the container, the said conduit arranged for conveying gas. For example, conduits such as flexible hoses for carrying gas can be screw- or friction-fitted to the valve in order to be coupled thereto, and can be retained in a gas-tight manner by a rubber gasket of some kind.

In some embodiments, the or each portal can further includes a locking mechanism operative to lock the sealing arrangement in the closed position. In some forms this can comprise a cap with a key lock or the like, although other variations are possible such as a hinged flap with a lockable latch, for example.

In embodiments where two portals are located at the shipping container, the portal which is operatively coupled to the fumigant inlet means and which delivers fumigant into the container, is disposed above the portal which is operatively coupled in use to the fumigant extraction means and which removes fumigant from the container. Such an arrangement allows the fumigant, which is generally heavier than air, to fall in a dispersed fashion downward over the top of the material to be fumigated (such as the timber and dunnage, or agricultural products etc) inside the container, and then to be extracted from a location near the bottom of the container.

In one form, the at least one portal can be located in a door of the container. In one arrangement where there are two portals, they can both be disposed in the same door of the container. In other forms, the portal (or two or more portals) can be located anyplace on the roof, walls or floor of the container. If there are two portals they need not be located in the same surface of the container and can, for example, be located at opposite ends or in opposing sides of the container, or in an arrangement with one portal in the top of the container and the other in the bottom of the container.

In the arrangement where there is a portal located in the door of the container, the portal can be located in a recess formed in the door. Typically container doors and walls have corrugated recesses formed therein to stiffen and strengthen the walls and doors to prevent bulging under load. In such a position, a portal may be accessible without protruding beyond the maximum external dimensions of the container and therefore possibly interfering with the stackability or placement of the container when stored near adjacent containers. In still other arrangements, the portal need not be located in the side wall ridge, but can be located in another custom-formed recess or concavity formed at the side wall, roof, floor or door of the container, or not in any recess at all.

In a second aspect the present invention provides a fumigation assembly comprising:
- an ISO shipping container as defined in the first aspect; and
- a fumigation system comprising a fumigant inlet means for introducing a flow of fumigant into the shipping container and a fumigant extraction means arranged for removing fumigant from the shipping container.

In one embodiment, the fumigant inlet means can comprise a fan arranged to deliver fumigant gas into the shipping container via a conduit operatively coupled to one (or the) gas portal.

In one embodiment, the fumigant inlet means can comprise a heater to convert a liquid source of fumigant into a gas. The heat energy transferred to the liquid fumigant enables it to become buoyant and to become part of the gas flow. Other alternative arrangements are possible, for example where the fumigant inlet means is adapted to detachably couple to a mobile source of the fumigant such as a motor vehicle on which a fumigant gas source or liquid source vessel and associated heater is mounted.

In one embodiment, the fumigant extraction means can comprise a fan arranged to provide suction for the extraction of fumigant from the shipping container via a conduit operatively coupled to one or the gas portal.

In a third aspect, the present invention provides a method of retrofitting a pre-existing ISO shipping container to incorporate at least one gas portal, where-the portal is adapted for being operatively coupled to a fumigation system external to the container for fumigating the container, where the fumigation system comprises a fumigant introduction means to allow a flow of a fumigant into the shipping container and a fumigant extraction means arranged to remove fumigant from the shipping container,
the portal incorporating:
- an opening which places an interior and an exterior of the container in fluid communication; and
- a sealing arrangement positioned at the opening to enable an in use coupling of the fumigation system at the portal and closure of the opening when the fumigation system is not coupled to the portal;
wherein the portal protrudes out of the container only to the extent that it does not interfere with placement of the container in a stack or other close-facing relationship with an adjacent container.

In one embodiment, the at least one gas portal is retrofitted to the container by cutting a hole into at least one of a wall, roof, floor or door of the container and then locating the portal into position at the hole. Multiple portals can be fitted to the container in the same manner. Rather than retrofitting a portal to a container door in situ, in one form the retrofitting of the gas portal of the container can accomplished by replacing an entire container door with another door which has been separately modified with at least one gas portal located thereat.

With the present invention a method of fumigating material can be performed, the method comprising the steps of:
- receiving an ISO shipping container having the material therein, the container having at least one gas portal incorporated in a surface of the container, the portal protruding out of the container only to the extent that it does not interfere with placement of the container in a stack or other close-facing relationship with an adjacent container;
- coupling a fumigation system to the at least one gas portal and externally to the container; and
- operating the fumigation system to fumigate the material in the container.

In one embodiment, the step of operating the fumigation system to fumigate the material in the container involves the provision of a flow of fumigant to the shipping container from a fumigant source.

In one embodiment, the method can further comprise the step of extracting a flow of fumigant from the shipping container via the fumigation system.

In one embodiment, the method is otherwise as defined for the operation of the fumigation system of the assembly of the second aspect.

In one embodiment, the step of extracting a flow of fumigant can be performed simultaneously with the provision of a flow of fumigant to the shipping container, which can effectively circulate fumigant and gases within the container. Such an arrangement can allow a more even and thorough dispersion of the fumigant and gases as they enter and are dispersed in the shipping container.

In one embodiment, the method can further comprise the step of absorbing/adsorbing at least part of the fumigant extracted from the shipping container onto or at a substrate material. In such an arrangement, the substrate material is placed in a vessel which is operatively coupled to the extraction means, and the substrate is arranged to have sufficient capacity to adsorb/absorb part if not all of the fumigant extracted from the shipping container.

In one embodiment, the method can further comprise the step of washing at least part of the substrate to remove the absorbed/adsorbed fumigant. In one arrangement, the substrate can be an activated carbon and the absorption bed can be washed with a scrubbing solution, such as sodium thiosulphate, to yield one or more salts, such as bromide and sodium methylthiosulphate.

Generally the fumigant includes an alkyl halide such as methyl bromide.

It is envisaged that some embodiments of the ISO container may be built (or pre-existing containers retrofitted) with a plurality of small diameter floor and wall-mounted pipes connected via a system of connectors to a fumigant sampling and detection meter unit which is positionable at an exterior surface location on the shipping container. These floor and wall-mounted pipes may be located in recesses or grooves which may form part of the construction of the walls or floor of the container. In such an embodiment, the quantity of fumigant remaining in the container can thus be monitored during the step of extracting a flow of fumigant from the container, so an operator can know when to disconnect the extraction fan. In an alternative embodiment, a sampling line for monitoring the concentration of residual fumigant in the extracted gases can be branched off the conduit located between the portal and the extraction fan, for example. The branch line may be connected to the fumigant sampling and detection meter unit which again may be positionable at an exterior surface location on the shipping container, or in some other location near the extraction fan.

Rather than having a separate fumigation facility for fumigating goods prior to shipment, or upon receipt of a shipment, which would require removal of the.goods from the containers, the inventor has devised a new type of ISO shipping container in which fumigation can be conducted *in situ* simply by coupling the container to a portable fumigation system. The ISO shipping container is in all respects suitable for handling and use in the vicinity of a wharf, port, truck dock or airport and there is no need for any new type of lifting or handling equipment to be used. Fumigation of bulky goods, produce, manufactured goods and timber packing and dunnage on site at the wharf by skilled operators can allow for safe quarantine and pre-shipment treatment and eliminates the possibility of insects or vermin escaping into the environment. Such a method can speed up the fumigation processing rate (by eliminating the need for time to be wasted on unloading and reloading containers). The method can also provide enhanced occupational health and safety benefits by limiting the exposure of workers to fumigant gases to minimal levels.

### Brief Description of the Drawings

Notwithstanding any other forms which may fall within its scope, preferred forms of the invention will now be described, by way of example only, with reference to the accompanying drawings in which:
Figure 1 shows a perspective schematic view of a shipping container in accordance with one embodiment of the invention;
Figure 2 shows a perspective schematic view of a shipping container in accordance with a further embodiment of the invention, the container arranged in a first operating configuration (Figure 2(a)) for the introduction of a fumigant gas during a method of fumigating material in the shipping container; and arranged in a second operating configuration (Figure 2(b)) for the extraction of gas during a method of extracting gas from the shipping container;
Figure 3 shows an end view of a shipping container in accordance with a further embodiment of the invention;
Figure 4a shows a side, cross-sectional view of one embodiment of a portal in accordance with the invention, the portal shown in a closed configuration and also in an open configuration when coupled in use via a conduit to either a fumigation system or a gas extraction system;
Figure 4b shows a side, cross-sectional view of one embodiment of a portal in accordance with the invention, the portal shown in a closed configuration and also in an open configuration when coupled in use via a conduit to either a fumigation system or a gas extraction system;
Figure 4c shows a side, cross-sectional view of one embodiment of a portal in accordance with the invention, the portal shown in a closed configuration and also in an open configuration when coupled in use via a conduit to either a fumigation system or a gas extraction system;
Figure 4d shows a side, cross-sectional view of one embodiment of a portal in accordance with the invention, the portal shown in a closed configuration and also in an open configuration when coupled in use via a conduit to either a fumigation system or a gas extraction system;
Figure 4e shows a front, elevational view of one embodiment of a portal in accordance with the invention, the portal shown in an open configuration ready for coupling to either a fumigation system or a gas extraction system, and in a closed configuration when not coupled to such systems;
Figure 4f shows a front, elevational view of one embodiment of a portal in accordance with the invention, the portal shown in an open configuration ready for coupling to either a fumigation system or a gas extraction system, and in a closed configuration when not coupled to such systems;
Figure 4g shows a front, elevational view of one embodiment of a portal in accordance with the invention, the portal shown in an open configuration ready for coupling to either a fumigation system or a gas extraction system, and in a closed configuration when not coupled to such systems;
Figure 4h shows a front, elevational view of one embodiment of a portal in accordance with the invention, the portal shown in an open configuration ready for coupling to either a fumigation system or a gas extraction system, and in a closed configuration when not coupled to such systems.

### Detailed Description of the Preferred Embodiments

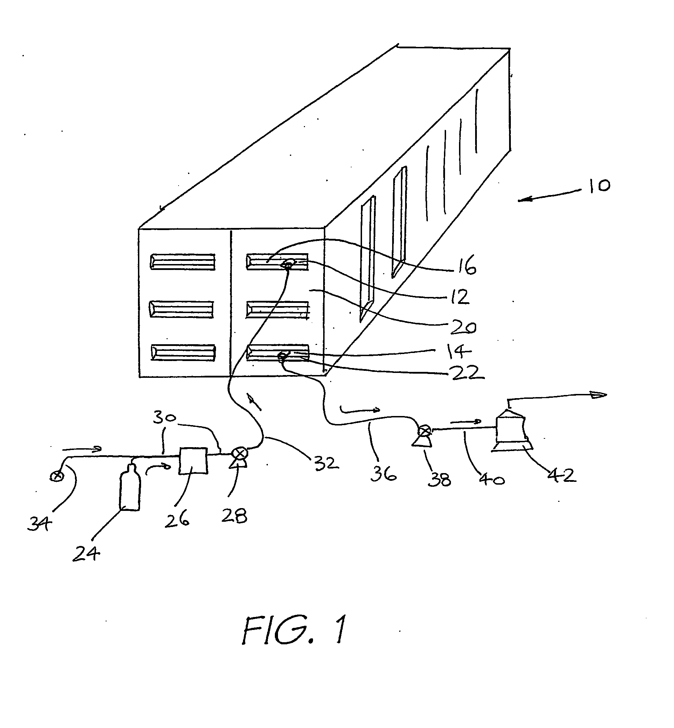

Referring to the drawings, Figure 1 shows one embodiment of a forty foot long ISO shipping container 10 which has two gas portals 12, 14 fitted thereto, one portal 12 being located in an uppermost stiffening groove or recess 16 positioned in an end door 20 of the container 10, and a second portal 14 being located in a lowermost stiffening groove or recess 22 located in the same end door 20. The uppermost portal 12 is shown coupled to a fumigant introduction means in the form of a fumigant tank 24 containing a source of liquefied fumigant reagent, a heater 26, an inlet fan 28 and a gas hose 30 located between each of these items and a further hose 32 connected to the uppermost portal 12. Such an arrangement ensures that the heavy toxic gas molecules, for example methyl bromide, are appropriately gasified for transfer into the shipping container 10. The gas hose 30 can also be connected to an air inlet hose 34 if greater quantities of dilution gas are needed.

The lowermost portal 14 is shown coupled via a further hose 36 to a fumigant extraction means in the form of a suction fan 38, and the suction fan 38 is in turn connected via a hose 40 to a fumigant absorption tower 42 containing activated carbon for absorption of the fumigant gas prior to atmospheric discharge. This ensures that the toxic gases being extracted from the shipping container 10 after the fumigation process will not pose any occupational health risk to operators of the fumigation apparatus while those operators may be standing in the vicinity. As a safety check, the concentration of toxic gases remaining in the interior of the shipping container 10 can be measured from gas samples drawn via a plurality of separate gas sampling lines that are connected to a gas flow meter test unit, or from a side pipe connected to the inlet of the suction fan 38. This measurement allows an operator to ascertain when it is safe to open the end doors 20 of the container 10 and possibly remove or access the contents safely.

In the arrangement shown in Figure 1, the fumigation system can be operated to fumigate goods located in the shipping container 10 in a 'continuous' mode or in a 'batch mode' if required. In the 'continuous mode', the operation of the inlet fan 28 and the suction fan 38 can be regulated so that a like flow of gas containing the necessary dose of fumigant is passed into and out of the shipping container 10, and the gas flow can be arranged to circulate within the fumigation container when operating, for example by positioning the inlet portal and outlet portal in different ends, in opposing sides, or in a roof and a floor of the container, for example, to facilitate cross-flow gas circulation patterns. Eventually without sufficient circulation, the fumigant gases (which are heavier than air) will generally locate in the lower portion of the shipping container (which therefore is usually a good location for a portal to be connected to the extraction fan). When operated in the 'batch mode', the inlet fan 28 and the suction fan 38 simply need to be actuated at different times so that the necessary dose of fumigant is first passed into the shipping container for some specific fumigation interval, and then sucked out of the shipping container afterwards.

The portals shown in the drawings each have an opening which can be accessed so as to place an interior and an exterior of the container in fluid communication. The portals 12, 14 shown in Figure 1 are located in the end door 20 stiffening grooves or recesses 16, 22 so that the portals 12, 14 do not protrude much beyond the container door face, so that the container 10 itself can still be placed in close end to end proximity with another ISO shipping container 10 at a wharf, dock, rail car bed or the like. While the outermost edge of the portal 12, 14 is not necessarily flush with the external wall dimension of the container box itself, the recessed location of the portal in a groove or ridge means that less damage is likely to the portal if the end door 20 of the container is bumped against another container 10 in some way. Furthermore that the number of containers able to be placed end to end in a given space is not reduced in any way by having the portal in such a location.

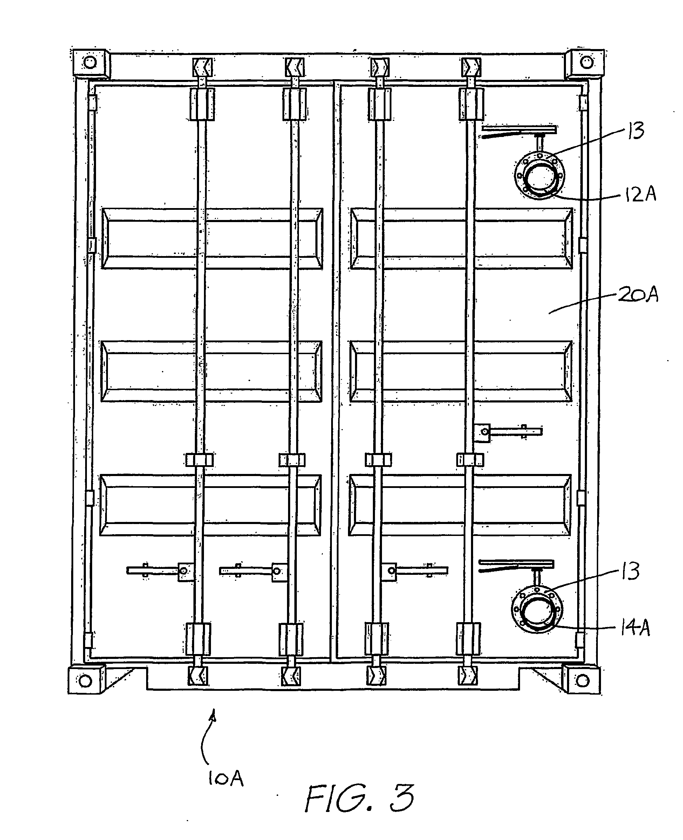

A similar arrangement is shown in Figure 3, with the exception that the portals are not located in the door stiffening grooves or recesses. In this case each portal comprises a circular cylindrical tube 12A, 14A that is welded to a lateral flange 13, which is in turn bolted and glued to the rim of a respective round hole that is cut into the door 20A in two vertically aligned and disposed positions adjacent to an uppermost edge and a lowermost edge of the end door 20A. In this case the outermost edge of the cylindrical tubes 12A, 14A extend beyond the external wall dimension of the container box itself, but the cylindrical tubes 12A, 14A are still not so long as to interfere with the routine placement of two containers at end to end in a given available space.

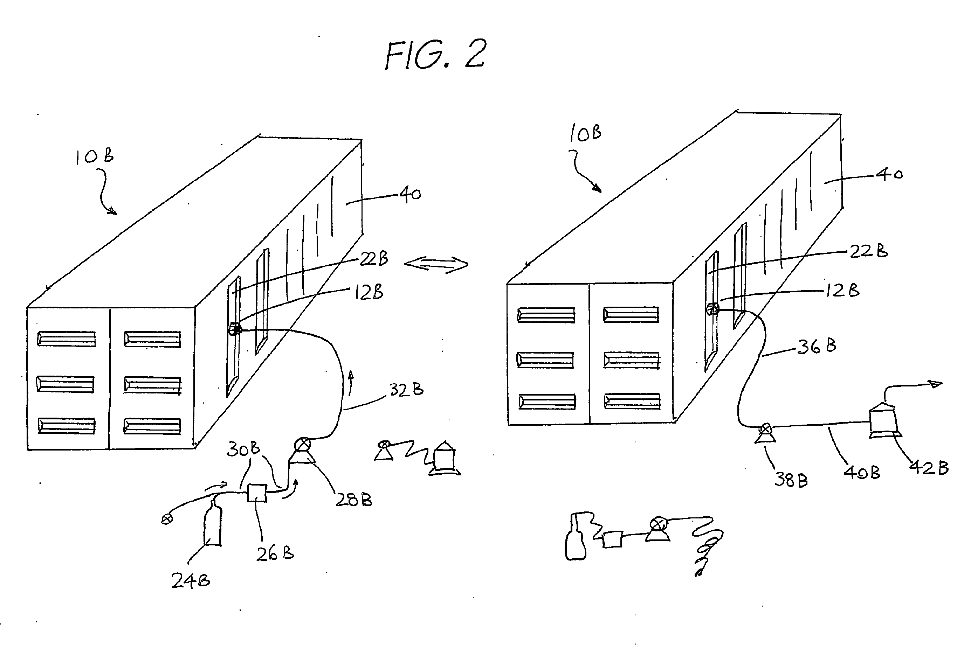

Referring now to Figure 2, an embodiment of an ISO shipping container 10B is shown in two configurations. This shipping container 10B has only one gas portal 12B fitted thereto, being located in a stiffening groove or recess 22B positioned in a side wall 40 of the container 10B. In the first configuration, the portal 12B is shown coupled to a fumigant introduction means in the form of a fumigant tank 24B containing a source of liquefied fumigant reagent, a heater 26B, an inlet fan 28B and a gas hose 30B located between each of these items and a further gas hose 32B connected to the portal 12B. In this first configuration, fumigant gas is pumped into the shipping container 10B, and then at some point the flow of fumigant is stopped. After a designated fumigation interval has elapsed, and the fumigant has been in contact with the contents of the shipping container for a sufficient period, the fumigant and other gases are evacuated from the container 10B, flowing consecutively through the portal 12B, a conduit hose 36B, and the fumigant extraction means in the form of a suction fan 38B, the fan 38B being in turn connected via a gas hose 40B to a fumigant absorption tower 42B containing activated carbon for absorption of the fumigant gas prior to atmospheric discharge.

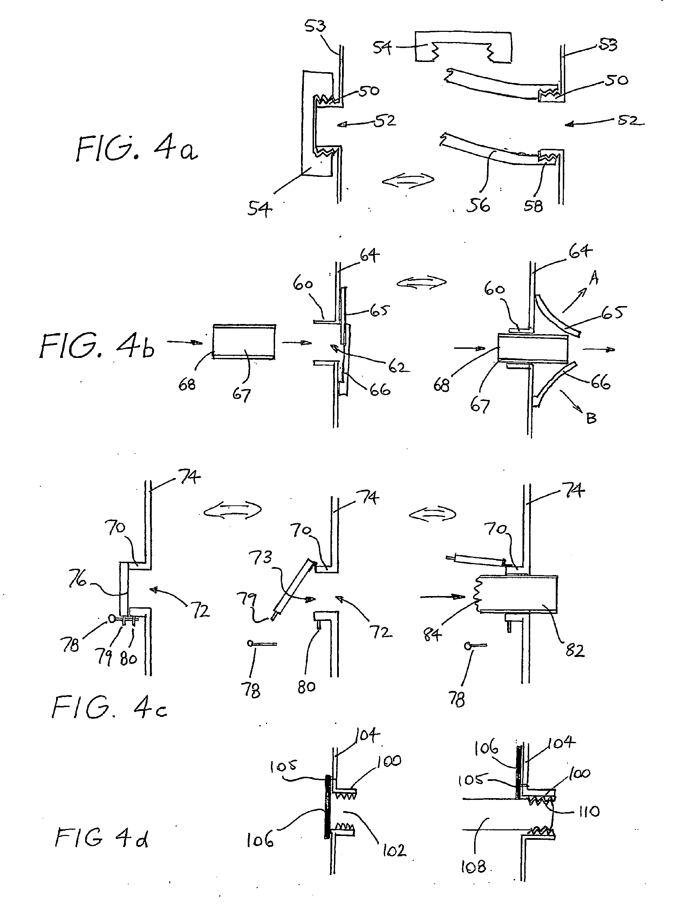

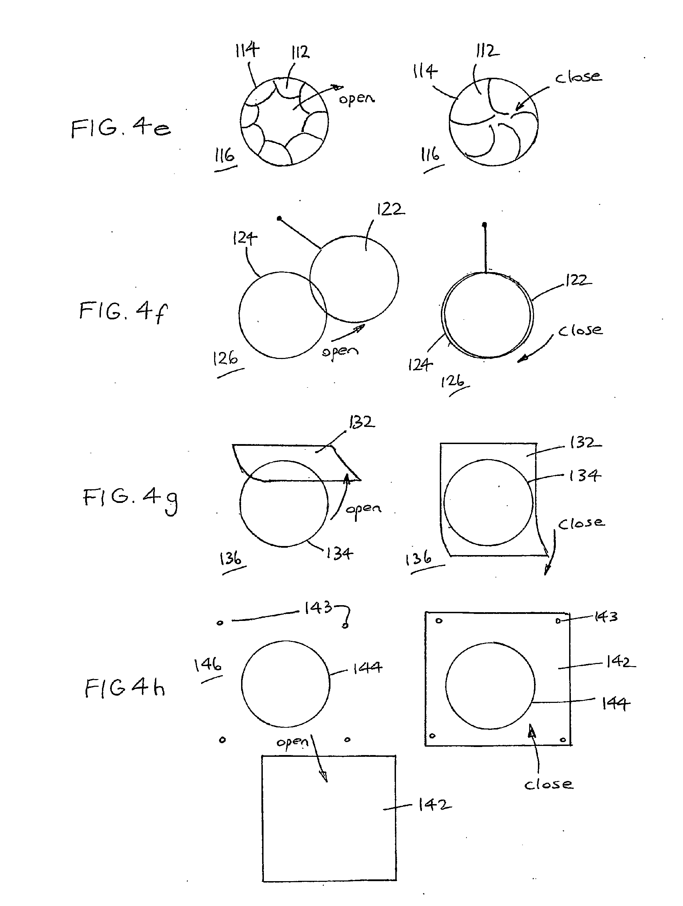

The portals have a sealing arrangement positioned at the opening to enable a coupling somehow of a fumigant inlet or outlet hose into the opening. The portals also have a closure located at the opening to close off the opening when the fumigant inlet or outlet hose is not coupled to the portal. Some examples are presented in Figures 4a, 4b, 4c, 4d, 4e, 4f, 4g and 4h which will now be discussed.

In Figure 4a, a portal is shown in the form of a threaded sleeve 50 which depends from a hole 52 located in the container wall 53. The sleeve 50 is threaded externally to receive a mating threaded cap 54 which is positionable over the sleeve 50 and which closes the hole opening when the portal is not in use. In the second configuration shown, the threaded cap 54 is removed, and a conduit hose 56 having an internal end thread 58 is threadingly engaged with the sleeve 50. In this configuration, gases can be passed via the sleeve 50 into or out of the container interior.

In Figure 4b, a portal is shown in the form of a smooth-sided sleeve 60 which depends from a hole 62 located in the container wall 64. The hole is closed by two resiliently flexible overlapping flaps 65, 66 which are attached to the container wall 64 and which close the hole opening when the portal is not in use. In the second configuration shown, a smooth cylindrical coupler 67 is received into the smooth-sided sleeve 60 in a frictional interfit. When the smooth cylindrical coupler 67 is pushed into the smooth-sided sleeve 60, the resiliently flexible flaps 65, 66 are pushed inward into the container interior in the direction of arrows A, B whilst still being attached to the container wall 64 and also remaining in gas tight contact with the exterior of the smooth cylindrical coupler 67. In this configuration, a hose (not shown) can be attached to the end 68 of the smooth cylindrical coupler 67 which extends outside of the container, and gases can be passed via the coupler 67 into or out of the container interior.

In Figure 4c, a portal is shown in the form of a smooth-sided sleeve 70 which depends from a hole 72 located in the container wall 74. The outermost end 73 of the sleeve 70 is closed by a cap 76 which is hingedly mounted thereto, and which can be locked in the closed position by a pin 78 which is frictionally engagable in aligned receiving loops 79, 80 which extend laterally from each of the cap 76 and the smooth-sided sleeve 70. The cap 76 is closed and the pin 78 is inserted into the aligned loops 79, 80 so as to close the hole opening when the portal is not in use. In the second configuration shown, the pin 78 is removed from the aligned loops 79, 80 and the cap 76 is hingedly opened. When fully opened, a smooth cylindrical coupler 82 is received into the smooth-sided sleeve 70 in a frictional interfit, as shown in the third configuration shown. When the smooth cylindrical coupler 82 is pushed into the smooth-sided sleeve 70, the cap 76 remains in the hingedly open position. In this configuration, a hose can be attached to the end 84 of the smooth cylindrical coupler 82 which extends outside of the container, and gases can be passed via the coupler 82 into or out of the container interior.

In Figure 4d, a portal is shown in the form of a threaded sleeve 100 which depends from a hole 102 located in the container wall 104.. The sleeve 100 is threaded internally and extends into the container interior. A thin pivoting cap 106, which is mounted flat against the external wall of the container by a pivot pin 105, is positionable over the hole 102 to close the hole 102 opening when the portal is not in use. In the second configuration shown, the pivoting cap 106 is pivoted about the pin 105 and rotated away from the hole opening, and a conduit hose 108 having an external end thread 110 is threadingly engaged with the sleeve 100. In this configuration, gases can be passed via the sleeve 100 into or out of the container interior.

Figures 4e to 4h illustrate a number of different portal closure arrangements which can be used. Each of these closures is arranged at a hole which is made in the wall, roof, floor or door of the shipping container. In the drawings of each of these arrangements, no inlet or outlet hose or conduit is shown in position in the opening, but it is to be understood that such a hose is received in use in a friction or interference fit in the portal when the hole is not closed off.

In Figure 4e, the hole 114 is closed by a spiral-type closure, of the type found in old style cameras. The closure is comprised of a number of flexible overlapping flaps 112 which are slidably and rotatably attached to the container wall 116 and which, when the portal is in use, retract about themselves to form a central opening to receive a gas hose or conduit, and can also expand to fill that central opening when the portal is not in use.

In Figure 4f, the hole 124 in the container wall 126 is closed by a pivoting cap 122. The pivoting cap 122 is swingingly positionable over the hole 124 to close the hole opening when the portal is not in use. In the second configuration shown when the portal is in use, the pivoting cap 122 is rotated away from the hole 124 opening, allowing that opening to receive a gas hose or conduit.

In Figure 4g, the hole 134 in the container wall 136 is closed by a resiliently flexible overlapping flap 132 which is attached to the exterior of the container wall 136 and which covers and closes the hole 134 opening when the portal is not in use. In the second configuration shown, when the portal is in use, the flap 132 is bent away from the hole opening, allowing that opening to receive a gas hose or conduit.

In Figure 4g, the hole 144 in the container wall 146 is closed by a removable plate 142 which is removably screwed or bolted at the small holes 143 located at the exterior of the container wall 146. The plate 142 covers and closes the hole.144 opening when the portal is not in use. In the second configuration shown, when the portal is in use, the plate 142 is unscrewed and moved away from the hole 144 opening, allowing that opening to receive a gas hose or conduit.

The fumigant gas methyl bromide can become attached to the activated carbon of the absorption bed 42, 42B prior to discharge of the fumigant/gas mixture from the fumigation apparatus. The absorption bed can be periodically washed, for example with a scrubbing solution, such as sodium thiosulphate. Scrubbing of the absorption bed with sodium thiosulphate yields bromide and sodium methylthiosulphate which are non-toxic salts which can be discharged safely to the environment. Thus, the methyl bromide gas is degraded following its fumigation and then extraction from the fumigation apparatus.

Now that several preferred embodiments of the present invention have been described in some detail it would be apparent to those skilled in the art that the shipping container, fumigation assembly, gas extraction assembly and the methods for their use have at least the following advantages over the admitted prior art:
1. The shipping container used in the assembly is adapted from a widely known, conventional shipping container and thus is relatively convenient and uncomplicated to fabricate;
2. The adaptation of the shipping container for use in the assembly can be by retrofit of a conventional container;
3. When used as part of a fumigation assembly, the shipping container is relatively effective in fumigating produce; and
4. When used as a fumigation assembly, the shipping container is "environmentally friendly" in its fumigation and discharge of fumigant.

Those skilled in the art will appreciate that the invention described herein is susceptible to variations and modifications other than those specifically described. For example, the source of fumigant need not a located in the fumigation apparatus but rather may be mounted on a mobile vehicle such as a utility truck. The invention need not be restricted to methyl bromide as the fumigant but rather extends to any substance which is suitable in fumigating produce and thus killing pests, parasites, insects, or vermin, for example phosphine gas, carbon dioxide etc. The invention need not be restricted to the specific constructional features described, so for example, the circular-shaped holes for many of the portal arrangements shown in the drawings can be of other shapes (square, oval, and so on).

Such variations and modifications are considered within the scope of the present invention the nature of which is to be determined from the foregoing description.

## Claims

1. An ISO shipping container (10, 10B) which incorporates at least one gas portal (12, 14, 12B), the portal adapted for being operatively coupled to a fumigation system external to the container for fumigating the shipping container, where the fumigation system comprises a fumigant introduction means (24, 26, 28, 30, 32) to allow a flow of a fumigant into the shipping container (10, 10B) and a fumigant extraction means (36, 38, 40, 42) arranged to remove fumigant from the shipping container (10), the portal (12, 14, 12B) incorporating:
- an opening which places an interior and an exterior of the container (10) in fluid communication; and
- a sealing arrangement positioned at the opening to enable an in use coupling of the fumigation system at the portal (12, 14, 12B) and closure of the opening when the fumigation system is not coupled to the portal (12, 14, 12B);
wherein the portal (12, 14, 12B) protrudes out of the container only to the extent that it does not interfere with placement of the container (10, 10B) in a stack or other close-facing relationship with an adjacent container.

2. A shipping container as claimed in claim 1 having a single portal (12B) for operative coupling to one of the fumigant inlet means or fumigant extraction means, in use so that fumigant can flow between an interior and an exterior of the container (10B).

3. A shipping container as claimed in claim 1 having two portals (12, 14) for operative coupling to one each of the fumigant inlet means and the fumigant extraction means, in use so that fumigant can flow from an exterior of the container (10) to an interior thereof via one portal (12), and from the interior to the exterior of the container (10) via the other of the portals (14).

4. A shipping container as claimed in claim 2 or claim 3, wherein the sealing arrangement includes a valve capable of being opened and closed, the or each valve located in at least one of a wall, roof, floor or door of the shipping container.

5. A shipping container as claimed in claim 4 , wherein the or each valve is adapted for detachable engagement with a conduit located at an exterior of the container, the said conduit arranged for conveying gas.

6. A shipping container as claimed in any one of the preceding claims, wherein the or each portal further includes a locking mechanism operative to lock the sealing arrangement in the closed position.

7. A shipping container as claimed in claim 3 , wherein in use the portal (12) which is operatively coupled to the fumigant inlet means (24, 26, 28, 30, 32) is disposed above the portal (14) which is operatively coupled in use to the fumigant extraction means (36, 38, 40, 42).

8. A shipping container as claimed in any one of the preceding claims, wherein the at least one portal (12, 14) is located in a door (20) of the container (10).

9. A shipping container as claimed in claim 8, wherein the at least one portal (12, 14) is located in a recess (16, 22) formed in the door (20).

10. A fumigation assembly comprising:
- an ISO shipping container (10, 10B) as claimed in any one of the preceding claims; and
- a fumigation system comprising a fumigant inlet means (24, 26, 28, 30, 32) for introducing a flow of fumigant into the shipping container (10, 10B) and a fumigant extraction means (36, 38, 40, 42) arranged for removing fumigant from the shipping container (10, 10B).

11. A fumigation assembly as claimed in Claim 10, wherein the fumigant inlet means comprises a fan (28) arranged to deliver fumigant gas into the shipping container (10, 10B) via a conduit operatively coupled to one or the gas portal (12, 12B).

12. A fumigation assembly as claimed in Claim 10 or Claim 11, wherein the fumigant inlet means comprises a heater (26) to convert a liquid source of fumigant into a gas.

13. A fumigation assembly as claimed in any one of claims 10 to 12, wherein the fumigant extraction means comprises a fan (38) arranged to provide suction for the extraction of fumigant from the shipping container (10, 10B) via a conduit operatively coupled to one or the gas portal (12B, 14).

14. A method of retrofitting a pre-existing ISO shipping container (10, 10B) to incorporate at least one gas portal (12, 12B, 14), where the portal is adapted for being operatively coupled to a fumigation system external to the container (10, 10B) for fumigating the shipping container (10, 10B), where the fumigation system comprises a fumigant introduction means (24, 26, 38, 30, 32) to allow a flow of a fumigant into the shipping container (10, 10B) and a fumigant extraction means (36, 38, 40, 42) arranged to remove fumigant from the shipping container (10, 10B), the portal incorporating:
- an opening which places an interior and an exterior of the container (10, 10B) in fluid communication; and
- a sealing arrangement positioned at the opening to enable an in use coupling of the fumigation system at the portal (12, 12B, 14) and closure of the opening when the fumigation system is not coupled to the portal (12, 12B, 14);
wherein the portal (12, 12B, 14) protrudes out of the container only to the extent that it does not interfere (12, 12B, 14) with placement of the container (10, 10B) in a stack or other close-facing relationship with an adjacent container.

15. A method as claimed in Claim 14 , wherein the at least one gas portal (12, 12B, 14) is retrofitted to the container (10, 10B) by cutting a hole into at least one of a wall, roof, floor or door (20) of the container and then locating the portal into position at the hole.

16. A method as claimed in Claim 14 or Claim 15, wherein retrofitting of the gas portal (12, 12B, 14) of the container is accomplished by replacing a container door (20) with another door in which the at least one gas portal has been located.

## Patentansprüche

1. ISO-Frachtcontainer (10, 10B), der zumindest ein Gasportal (12, 14, 12B) enthält, wobei das Portal zur funktionalen Kopplung mit einem Begasungssystem außerhalb des Containers zur Begasung des Frachtcontainers angepasst ist, wobei das Begasungssystem eine Begasungsmitteleinführeinrichtung (24, 26, 28, 30, 32), um eine Strömung eines Begasungsmittels in den Frachtcontainer (10, 10B) zuzulassen, sowie eine Begasungsmittelabzugseinrichtung (36, 38, 40, 42) umfasst, die derart angeordnet ist, Begasungsmittel von dem Frachtcontainer (10) zu entfernen, wobei das Portal (12, 14, 12B) umfasst:
- eine Öffnung, die ein Inneres und ein Äußeres des Containers (10) in Fluidkommunikation bringt; und
- eine Dichtungsanordnung, die an der Öffnung positioniert ist, um im Gebrauch ein Koppeln des Begasungssystems an dem Portal (12, 14, 12B) und eines Verschlusses der Öffnung zu ermöglichen, wenn das Begasungssystem nicht mit dem Portal (12, 14, 12B) gekoppelt ist;
wobei das Portal (12, 14, 12B) aus dem Container nur in dem Ausmaß vorragt, dass es die Anordnung des Containers (10, 10B) in einem Stapel oder einer anderen eng liegenden Beziehung mit einem benachbarten Container nicht stört.

2. Frachtcontainer nach Anspruch 1, mit einem einzelnen Portal (12B) zur funktionalen Kopplung mit der Begasungsmitteleinlasseinrichtung oder Begasungsmittelabzugseinrichtung im Gebrauch, so dass Begasungsmittel zwischen einem Inneren und einem Äußeren des Containers (10B) strömen kann.

3. Frachtcontainer nach Anspruch 1, mit zwei Portalen (12, 14) zur funktionalen Kopplung mit der Begasungsmitteleinlasseinrichtung oder der Begasungsmittelabzugseinrichtung im Gebrauch, so dass Begasungsmittel von einem Äußeren des Containers (10) zu seinem Inneren über ein Portal (12) und von dem Inneren zu dem Äußeren des Containers (10) über das andere der Portale (14) strömen kann.

4. Frachtcontainer nach einem der Ansprüche 2 oder 3, wobei die Dichtungsanordnung ein Ventil aufweist, das zum Öffnen und Schließen in der Lage ist, wobei das oder jedes Ventil in zumindest einem einer Wand, eines Daches, eines Bodens oder einer Tür des Frachtcontainers angeordnet ist.

5. Frachtcontainer nach Anspruch 4, wobei das oder jedes Ventil zum lösbaren Eingriff mit einer Leitung angepasst ist, die an einem Äußeren des Containers angeordnet ist, wobei die Leitung zum Fördern von Gas angeordnet ist.

6. Frachtcontainer nach einem der vorhergehenden Ansprüche, wobei das oder jedes Portal ferner einen Verriegelungsmechanismus umfasst, der dazu dient, die Dichtungsanordnung in der geschlossenen Position zu verriegeln.

7. Frachtcontainer nach Anspruch 3, wobei im Gebrauch das Portal (12), das funktional mit der Begasungsmitteleinlasseinrichtung (24, 26, 28, 30, 32) gekoppelt ist, über dem Portal (14) angeordnet ist, das funktional im Gebrauch mit der Begasungsmittelabzugseinrichtung (36, 38, 40, 42) gekoppelt ist.

8. Frachtcontainer nach einem der vorhergehenden Ansprüche, wobei das zumindest eine Portal (12, 14) in einer Tür (20) des Containers (10) angeordnet ist.

9. Frachtcontainer nach Anspruch 8, wobei das zumindest eine Portal (12, 14) in einer Ausnehmung (16, 22) angeordnet ist, die in der Tür (20) geformt ist.

10. Begasungsbaugruppe, umfassend:
- einen ISO-Frachtcontainer (10, 10B) nach einem der vorhergehenden Ansprüche; und
- ein Begasungssystem, das eine Begasungsmitteleinlasseinrichtung (24, 26, 28, 30, 32) zum Einführen einer Strömung von Begasungsmittel in den Frachtcontainer (10, 10B) und eine Begasungsmittelabzugseinrichtung (36, 38, 40, 42) umfasst, die zum Entfernen von Begasungsmittel von dem Frachtcontainer (10, 10B) angeordnet ist.

11. Begasungsbaugruppe nach Anspruch 10, wobei die Begasungsmitteleinlasseinrichtung ein Gebläse (28) umfasst, das derart angeordnet ist, Begasungsmittelgas in den Frachtcontainer (10, 10B) über eine Leitung zu liefern, die funktional mit einem oder dem Gasportal (12, 12B) gekoppelt ist.

12. Begasungsbaugruppe nach einem der Ansprüche 10 oder 11, wobei die Begasungsmitteleinlasseinrichtung eine Heizung (26) umfasst, um eine flüssige Quelle für Begasungsmittel in ein Gas umzuwandeln.

13. Begasungsbaugruppe nach einem der Ansprüche 10 bis 12, wobei die Begasungsmittelabzugseinrichtung ein Gebläse (38) umfasst, das derart angeordnet ist, eine Saugwirkung für den Abzug von Begasungsmittel aus dem Frachtcontainer (10, 10B) über eine Leitung bereitzustellen, die funktional mit einem oder dem Gasportal (12B, 14) gekoppelt ist.

14. Verfahren zum Nachrüsten eines bereits vorhandenen ISO-Frachtcontainers (10, 10B), um zumindest ein Gasportal (12, 12B, 14) einzubauen, wobei das Portal zur funktionalen Kopplung mit einem Begasungssystem außerhalb des Containers (10, 10B) zum Begasen des Frachtcontainers (10, 10B) angepasst ist, wobei das Begasungssystem eine Begasungsmitteleinführeinrichtung (24, 26, 38, 30, 32), um eine Strömung eines Begasungsmittels in den Frachtcontainer (10, 10B) zu ermöglichen, sowie eine Begasungsmittelabzugseinrichtung (36, 38, 40, 42) umfasst, die derart angeordnet ist, Begasungsmittel aus dem Frachtcontainer (10, 10B) zu entfernen, wobei das Portal umfasst:
- eine Öffnung, die ein Inneres und ein Äußeres des Containers (10, 10B) in Fluidkommunikation bringt; und
- eine Dichtungsanordnung, die an der Öffnung positioniert ist, um im Gebrauch ein Koppeln des Begasungssystems an dem Portal (12, 12B, 14) und eines Verschlusses der Öffnung zu ermöglichen, wenn das Begasungssystem nicht mit dem Portal (12, 12B, 14) gekoppelt ist;
wobei das Portal (12, 12B, 14) von dem Container nur in dem Ausmaß vorragt, dass es die Anordnung des Containers (10, 10B) in einem Stapel oder einer anderen eng liegenden Beziehung mit einem benachbarten Container nicht stört (12, 12B, 14).

15. Verfahren nach Anspruch 14, wobei das zumindest eine Gasportal (12, 12B, 14) dadurch an den Container (10, 10B) nachgerüstet wird, dass ein Loch in zumindest eines einer Wand, eines Daches, eines Bodens oder einer Tür (20) des Containers geschnitten wird und dann das Portal in Position an dem Loch angeordnet wird.

16. Verfahren nach einem der Ansprüche 14 oder 15, wobei das Nachrüsten des Gasportals (12, 12B, 14) des Containers durch Austausch einer Containertür (20) gegen eine andere Tür erreicht wird, in der das zumindest eine Gasportal angeordnet worden ist.

## Revendications

1. Conteneur de transport de type ISO (10, 10B) qui incorpore au moins un portillon à gaz (12, 14, 12B), le portillon étant adapté à être fonctionnellement couplé à un système de fumigation à l'extérieur du conteneur pour fumiger le conteneur de transport, dans lequel le système de fumigation comprend un moyen d'introduction de fumigant (24, 26, 28, 30, 32) pour permettre un flux de fumigant vers l'intérieur du conteneur de transport (10, 10B), et un moyen d'extraction de fumigant (36, 38, 40, 42) agencé pour supprimer du fumigant hors du conteneur de transport (10), le portique (12, 14, 12B) incorporant :
- une ouverture qui met en communication fluidique un intérieur et un extérieur du conteneur (10) ; et
- un agencement d'étanchement positionné au niveau de l'ouverture pour permettre un couplage en utilisation du système de fumigation au niveau du portillon (12, 14, 12B) et une fermeture de l'ouverture quand le système de fumigation n'est pas couplé au portillon (12, 14, 12B) ;
dans lequel le portillon (12, 14, 12B) se projette hors du conteneur uniquement dans la mesure dans laquelle il n'interfère pas avec la mise en place du conteneur (10, 10B) dans un empilement ou une autre relation de juxtaposition avec un conteneur adjacent.

2. Conteneur de transport selon la revendication 1, ayant un unique portillon (12B) pour un couplage fonctionnel soit au moyen d'entrée de fumigant soit au moyen d'extraction de fumigant, afin que du fumigant puisse s'écouler entre un intérieur et un extérieur du conteneur (10B).

3. Conteneur de transport selon la revendication 1, ayant deux portillons (12, 14) pour un couplage fonctionnel à chacun du moyen d'entrée de fumigant et du moyen d'extraction de fumigant en utilisation, de sorte que du fumigant peut s'écouler depuis un extérieur du conteneur (10) vers un intérieur de celui-ci via un portillon (12), et depuis l'intérieur vers l'extérieur du conteneur (10) via l'autre des portillons (14).

4. Conteneur de transport selon la revendication 2 ou 3, dans lequel l'agencement d'étanchement inclut une valve capable d'être ouverte et fermée, la valve ou chaque valve étant placée dans au moins un élément parmi une paroi, une toiture, un plancher ou une porte du conteneur de transport.

5. Conteneur de transport selon la revendication 4, dans lequel la valve ou chaque valve est adaptée à être engagée de façon détachable avec un conduit situé à l'extérieur du conteneur, ledit conduit étant agencé pour transporter du gaz.

6. Conteneur de transport selon l'une quelconque des revendications précédentes, dans lequel le portique ou chaque portique inclut en outre un mécanisme de blocage dont la fonction est de bloquer l'agencement d'étanchement dans la position fermée.

7. Conteneur de transport selon la revendication 3, dans lequel, en utilisation, le portillon (12) qui est fonctionnellement couplé au moyen d'entrée de fumigant (24, 26, 28, 30, 32) est disposé au-dessus du portillon (14) qui est fonctionnellement couplé en utilisation au moyen d'extraction de fumigant (36, 38, 40, 42).

8. Conteneur de transport selon l'une quelconque des revendications précédentes, dans lequel ledit au moins un portillon (12, 14) est placé dans une porte (20) du conteneur (10).

9. Conteneur de transport selon la revendication 8, dans lequel ledit au moins un portillon (12, 14) est placé dans un évidement (16, 22) formé dans la porte (20).

10. Ensemble de fumigation, comprenant :
- un conteneur de transport de type ISO (10, 10B) selon l'une quelconque des revendications précédentes ; et
- un système de fumigation comprenant un moyen d'entrée de fumigant (24, 26, 28, 30, 32) pour introduire un flux de fumigant vers l'intérieur du conteneur de transport (10, 10B) et un moyen d'extraction de fumigant (36, 38, 40, 42) agencé pour supprimer le fumigant hors du conteneur de transport (10, 10B).

11. Ensemble de fumigation selon la revendication 10, dans lequel le moyen d'entrée de fumigant comprend un ventilateur (28) agencé pour fournir un gaz fumigant vers l'intérieur du conteneur de transport (10, 10B) via un conduit fonctionnellement couplé à l'un des portillons à gaz (12, 12B).

12. Ensemble de fumigation selon la revendication 10 ou 11, dans lequel le moyen d'entrée de fumigant comprend un dispositif chauffant (26) pour convertir une source liquide de fumigant en un gaz.

13. Ensemble de fumigation selon l'une quelconque des revendications 10 à 12, dans lequel le moyen d'extraction de fumigant comprend un ventilateur (38) agencé pour assurer une succion pour l'extraction du fumigant hors du conteneur de transport (10, 10B) via un conduit fonctionnellement couplé à l'un des portillons à gaz (12B, 14).

14. Procédé pour équiper a posteriori un conteneur de transport de type ISO (10, 10B) préexistant afin d'incorporer au moins un portillon à gaz (12, 12B, 14), dans lequel le portillon est adapté pour être fonctionnellement couplé à un système de fumigation externe au conteneur (10, 10B) afin de fumiger le conteneur de transport (10, 10B), dans lequel le système de fumigation comprend un moyen d'introduction de fumigant (24, 26, 38, 30, 32) pour permettre un écoulement d'un fumigant jusqu'à l'intérieur du conteneur de transport (10, 10B), et un moyen d'extraction de fumigant (36, 38, 40, 42) agencé pour supprimer le fumigant hors du conteneur de transport (10, 10B), le portillon incorporant :
- une ouverture qui met un intérieur et un extérieur du conteneur (10, 10B) en communication fluidique ; et
- un agencement d'étanchement positionné au niveau de l'ouverture pour permettre un couplage en utilisation du système de fumigation au niveau du portillon (12, 12B, 14), et une fermeture de l'ouverture quand le système de fumigation n'est pas couplé au portillon (12, 12B, 14) ;
dans lequel le portillon (12, 12B, 14) se projette hors du conteneur uniquement dans la mesure où il n'interfère pas (12, 12B, 14) avec la mise en place du conteneur (10, 10B) dans un empilement ou une autre relation de juxtaposition avec un conteneur adjacent.

15. Procédé selon la revendication 14, dans lequel ledit au moins un portillon à gaz (12, 12B, 14) est équipé sur le conteneur (10, 10B) en découpant un trou dans au moins une paroi, une toiture, un plancher ou une porte (20) du conteneur et ensuite en mettant en place le portillon en position au niveau du trou.

16. Procédé selon la revendication 14 ou 15, dans lequel un équipement a posteriori du portillon à gaz (12, 12B, 14) du conteneur est accompli en remplaçant une porte du conteneur (20) par une autre porte dans laquelle a été placé ledit au moins un portillon à gaz.
